# EUROPÄISCHE PATENTSCHRIFT

(11) **EP 1 161 692 B1**
(45) Veröffentlichungstag und Bekanntmachung des Hinweises auf die Patenterteilung: **27.08.2008**
(21) Anmeldenummer: 00914112.8
(22) Anmeldetag: 06.03.2000
(51) Int. Cl.: G01S 7/484, G01S 17/42, G01S 17/93

(54) **VORRICHTUNG MIT MINDESTENS EINEM LASERSENSOR UND VERFAHREN ZUM BETREIBEN EINES LASERSENSORS**
DEVICE WITH AT LEAST ONE LASER SENSOR AND METHOD OF OPERATING A LASER SENSOR
DISPOSITIF COMPORTANT AU MOINS UN DETECTEUR LASER ET PROCEDE POUR FAIRE FONCTIONNER UN DETECTEUR LASER

(30) Priorität: 11.03.1999 DE 19910667
(43) Veröffentlichungstag der Anmeldung: 12.12.2001
(73) Patentinhaber: Volkswagen Aktiengesellschaft, 38436 Wolfsburg (DE)
(72) Erfinder: BASTIAN, Andreas, D-38114 Braunschweig (DE); SCHNEIDER, Arthur, D-38112 Braunschweig (DE)
(74) Vertreter: Zucker, Volker
(86) Internationale Anmeldenummer: PCT/EP2000/001936
(87) Internationale Veröffentlichungsnummer: WO 2000/054070

(56) Entgegenhaltungen:
- EP-A- 0 816 868
- DE-A- 4 007 646
- US-A- 5 313 261
- US-A- 5 365 218
- US-A- 5 495 254
- US-A- 5 831 717

## Beschreibung

Die Erfindung betrifft eine Vorrichtung mit mindestens einem Lasersensor für ein Kraftfahrzeug, wobei der Lasersensor eine Einrichtung zum Verschwenken mindestens eines vom Lasersensor emittierbaren Laserstrahls in einem Scanbereich und eine Energieversorgung für den Lasersensor umfaßt, sowie ein Verfahren zum Betreiben eines Lasersensors eines Kraftfahrzeuges in einem Scanbereich mit mindestens einem Laserstrahl.

Insbesondere in der Kraftfahrzeugtechnik werden für verschiedene Regelungen Informationen über das Vorhandensein und den Abstand und gegebenenfalls der Geschwindigkeit von Objekten benötigt. Beispiele für derartige Regelungen bzw. Fahrerassistenzeinrichtungen sind die automatische Distanzregelung ADR, eine die Airbags frühzeitig zündende Precrash-Sensorik, Fahrspurwechsel-Einrichtungen oder Einparkhilfe-Einrichtungen. Dabei sind wiederum verschiedene Abstands-Sensoren auf Basis unterschiedlicher physikalischer Prinzipien wie beispielsweise Laser, Radar oder Ultraschall bekannt. Insbesondere im Anwendungsgebiet von ADR-Sensoren sind Laser-und/oder Radarsensoren fast ausschließlich im Einsatz, wobei eine die jeweiligen Vorteile der Sensoren ausnutzende Kombination der Sensoren besonders günstig ist. Insbesondere bei ADR-Systemen oder Fahrspurwechselhilfs-Einrichtungen genügt nicht ein punktuelles starres Abtasten des vorderen Verkehrsraums, sondern es muß zur sicheren Erfassung eines Objektes mindestens ein gewisser Sektor abgetastet werden. Eine derartige sektorförmige Abstrahlung ist dem Radarsensor aufgrund der Abstrahlcharakteristik seiner Antenne immanent. Beim Laser-Sensor muß dies hingegen durch eine Bewegung des Lasers oder einer Optik aktiv vorgenommen werden. Dabei wird der Laserstrahl sukzessive über den gewünschten Sektor geschwenkt und scannt diesen nach Objekten ab. Aufgrund der teilweise notwendigen großen Sicherheitsabstände von beispielsweise 50m muß der Laser eine entsprechend große Reichweite aufweisen. Dazu muß der Laser mit einer entsprechend großen Intensität bzw. Leistung betrieben werden. Dies führt jedoch zu einer erheblichen Verlustleistung im Laser-Sensor, die erstens von einer Energiequelle geliefert werden muß, und zweitens muß die in Form von Wärme auftretende Verlustleistung durch geeignete Kühlmaßnahmen abgeführt werden. Sind dabei passive Kühlmaßnahmen wie beispielsweise Kühlkörper nicht ausreichend, so müssen aktive Kühlungen zur Anwendung kommen, die zusätzliche Energie benötigen.

Andererseits ist die Ausgangsleistung von Lasersensoren beschränkt durch Sicherheitsanforderungen zugunsten von Personen in der Umgebung des Fahrzeuges, die von den Laserstrahlen getroffen werden können und durch einen Reflex in das Auge verletzt werden können.

Es wurde daher in der DE 39 03 501 ein optisches Abstands-Meßgerät für Fahrzeuge vorgeschlagen, das als Sender einen Halbleiter-Laser für den nahen Infrarotbereich umfaßt, dessen Sendeleistung von einer Signalauswerteeinheit autoadaptiv den Umweltbedingungen, insbesondere Sichtverhältnissen, einerseits und der Augensicherheit andererseits angepaßt wird. Bei dem Stand der Technik basiert die Adaption der Ausgangsleistung des Systems auf dem Empfangssignal. Dies bedeutet, daß die Sendeleistung des Systems direkt von der Leistung des empfangenen Echosignals abhängt Wird daher kein Echosignal empfange, weil sich kein reflektierendes Hindernis vor dem Fahrzeug befindet, so muß die "default"-Sendeleistung hochgewählt werden, um einen möglichst großen Bereich vor dem Fahrzeug abzudecken und Hindernisse in diesem erfassen zu können. Ein plötzlich auftretendes Objekt wird daher von einem unnötig starken Abtaststrahl getroffen. Bei schlecht reflektierenden Hindernissen muß ebenfalls eine hohe Sendeleistung gewählt werden.

Desweiteren wird in der DE 197 07 936 A1 ein Verfahren zum Bestimmen eines Abstandes eines Hindernisses zu einem Fahrzeug mit einem optischen Abstandssensor vorgeschlagen, bei dem zur Erhöhung der Augensicherheit vorgesehen ist, die Sendeleistung des Abstandssensors fahrgeschwindigkeitsabhängig zu steuern. Aus dem gleichen Grund weist der in US 5 831 717 offenbarte Fächerstrahl eine geringere Intensität in den Randbereichen auf.

Die DE 40 07 646 A betrifft eine Anordnung zur Verbesserung der Sicht in Fahrzeugen, bei welcher mittels eines infraroten Laserstrahls die Umgebung des Fahrzeuges ausgeleuchtet wird und die mittels des Infrarotlichts ausgeleuchtete Umgebung durch eine spezielle Optik aufgenommen und auf einem Display dargestellt wird. Eine Vorrichtung zur Bestimmung der Lage und/oder des Abstandes eines Objektes, das sich in einem Scanbereich eines Lasersensors befindet, ist dort nicht angegeben.

Der Erfindung liegt die Aufgabe zugrunde, eine Vorrichtung mit einem scannenden Lasersensor und ein Verfahren zum Betreiben einer solchen Vorrichtung zu schaffen, die im zeitlichen Mittel weniger Leistung ohne einen wesentlichen Informationsverlust aufnehmen.

Die Lösung des technischen Problems ergibt sich durch die Merkmale der Patentansprüche 1 und 5.

Gemäß der Erfindung ist vorgesehen, daß die Abgabeleistung des vom Lasersensor emittierten Laserstrahls in Abhängigkeit von der Richtung des Laserstrahls variierbar ist.

Durch die Variation der zugeführten Leistung in Abhängigkeit von der Position der Einrichtung zur Schwenkung des Laserstrahls, wobei in den Bereichen größerer Relevanz dem Laser eine größere Leistung als in den weniger relevanten Bereichen zur Verfügung gestellt wird, wird die im Mittel aufgenommene Leistung des Sensors reduziert, so daß einerseits die Energieversorgung selbst als auch eine gegebenenfalls notwendige Kühlung kleiner dimensioniert werden können und gleichzeitig die Augensicherheit erhöht wird. Als weiterer Vorteil der Erfindung ist die Erhöhung der Lebensdauer des Lasersensors zu sehen.

Weitere vorteilhafte Ausgestaltungen ergeben sich aus den Unteransprüchen.

Nach einer vorteilhaften Ausführungsform ist vorgesehen den Verlauf der Abstrahlleistung des Lasersensors stetig zu variieren.

Eine andere Ausgestaltung sieht vor, daß die maximale Leistung des Lasersensors und/oder der Leistungsverlauf über den Scanbereich zusätzlich in Abhängigkeit von der Fahrzeuggeschwindigkeit gewählt wird.

Dies hat den Vorteil, daß die Abstrahlleistung des Lasersensors immer den tatsächlichen Erfordernissen der Fahrsituation angepaßt ist und die Gefährdung für Personen sich noch weiter verringert.

Desweiteren kann vorgesehen sein, die maximale Abstrahlleistung des Lasersensors und/oder der Leistungsverlauf über den Scanbereich in Abhängigkeit eines erfassten Objektes zu wählen, dabei kann sowohl der Abstand des Objektes als auch ob das Objekt ein Lebewesen oder ein Gegenstand ist, eine Rolle spielen. Insbesondere für den Verlauf der Abstrahlleistung ist es wichtig, wo sich das Objekt gegenüber dem Fahrzeug bzw. dem Lasersensor befindet.

Die Erfindung wird nachfolgend anhand eines bevorzugten Ausführungsbeispiels näher erläutert. Die einzige Figur zeigt einen Scanbereich einer Laser-Scan-Abstandssensorik.

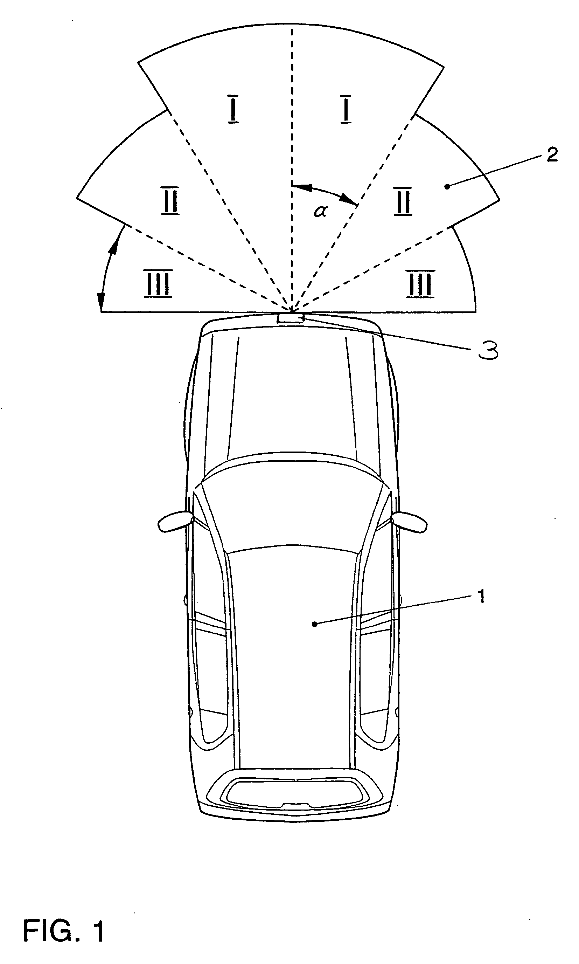

In der Fig. 1 ist ein Kraftfahrzeug 1 mit einem im vorderen Bereich des Kraftfahrzeuges 1 angeordneten, scannenden Lasersensor 3 dargestellt, der beispielsweise Bestandteil eines ADR-Systems und einer Fahrspurwechselassistenz-Einrichtung ist. Der Lasersensor 3 umfaßt eine nicht dargestellte Sendeeinheit, die Laserstrahlung emittiert und eine ebenfalls nicht dargestellte Empfangeinrichtung, die von Objekten bzw. Hindernissen reflektierte Laserstrahlung empfängt und nach Laufzeit und Einfallswinkel auswerten kann. Desweiteren umfaßt der Lasersensor 3 eine Einrichtung zum horizontalen Verschwenken des Laserstrahls über einen Scanbereich 2, der im dargestellten Beispiel 180° beträgt. Es sind jedoch auch Scanbereiche bis 360° denkbar. Die Einrichtung zum Verschwenken des Laserstrahls kann entweder den Laser als ganzes schwenken oder aber durch eine geeignete Umlenkoptik gebildet werden. Dem Lasersensor ist eine Energieversorgung zugeordnet, die eine variierbare Leistung dem Lasersensor zur Verfügung stellt, die dieser in Laserstrahlung umsetzt. Je größer die von der Energieversorgung zur Verfügung gestellte Abstrahlleistung ist, desto größer ist die Intensität und somit Reichweite des Lasersensors 3.

Bei einem ADR-System sind beispielsweise die unmittelbar vor dem Kraftfahrzeug 1 sich befindlichen anderen Kraftfahrzeuge von Interesse, die auch auf größere Entfernung sicher erfaßt werden müssen, wohingegen Kraftfahrzeuge auf benachbarten Fahrspuren nur von untergeordnetem Interesse sind. Diese sind beispielsweise nur in unmittelbarer Nähe des Kraftfahrzeuges 1 von Interesse, falls der Kraftfahrzeugführer einen Fahrspurenwechsel plant und überprüft werden muß, ob sich Kraftfahrzeuge in der gewünschten Fahrspur befinden und ob ohne Risiko die Fahrspur gewechselt werden kann. Aufgrund dieser Vorüberlegungen kann die Reichweite des Lasersensors 3 in den Abschnitten, wo der Scanbereich benachbarte Fahrspuren überstreicht, geringer gewählt werden. Dies ist in einer diskreten Form in der Fig. 1 dargestellt, wobei drei unterschiedliche Abschnitte I, II und III gewählt wurden. Der Abschnitt I umfaßt dabei beispielsweise einen Scanwinkel von -30° bis 30° und dient zur Erfassung unmittelbar vorausfahrender Kraftfahrzeuge. In diesem Bereich wird der Lasersensor 3 mit der größten Leistung und somit Reichweite betrieben. Der Abschnitt II erfaßt auf benachbarten Fahrspuren befindliche Kraftfahrzeuge, die gegebenenfalls auf die eigene Fahrspur wechseln könnten bzw. die bei einem Fahrspurwechsel zu beachten wären, wobei dieser Abschnitt II beispielsweise die Scanwinkel von - 60° bis - 30° und 30° bis 60° umfaßt. Im Abschnitt III werden nahezu benachbarte Kraftfahrzeuge erfaßt, so daß eine Reichweite von 4 bis 5 m vollkommen ausreichend ist. Somit kann die im Mittel benötigte Leistung ohne Informationsverlust reduziert werden. Des weiteren wird somit auch die Lichtleistung, die einen möglichen benachbarten Bürgersteig überstreicht, reduziert, so daß eine Verletzungsgefahr des Augenlichtes von Passanten reduziert wird.

Neben einer solchen abgestuften Verringerung der Intensität kann diese von der Mittelstellung auch kontinuierlich verringert werden, d.h. die Funktion Intensität i(α) ist eine stetige Funktion. Bei Ausführungsformen, wo zwei Laser-Scan-Sensoren 3 links und rechts im vorderen Bereich des Kraftfahrzeuges 1 angeordnet werden, wird die Winkelverteilung i(α) entsprechend anders gewählt, so daß wieder die relevantesten Bereiche mit größter Intensität abgescannt werden.

Da der einzuhaltende Sicherheitsabstand von der Geschwindigkeit abhängig ist, wird der Laser insbesondere im Abschnitt I mit zunehmender Geschwindigkeit mit zunehmender Intensität betrieben. Eine weitere Möglichkeit zur zusätzlichen Variation der Intensität ist, daß verschiedene Abschnitte mit unterschiedlicher Scan-Geschwindigkeit durchlaufen werden. So kann beispielsweise der Abschnitt III mit einer höheren Scan-Geschwindigkeit durchlaufen werden, um die Verletzungsgefahr von Passanten weiter zu reduzieren.

## Patentansprüche

1. Vorrichtung mit mindestens einem Lasersensor (3) für ein Kraftfahrzeug (1) zur Bestimmung der Richtung und/oder des Abstandes eines in einem Scanbereich (2) befindlichen Objekts, wobei der Lasersensor (3) eine Einrichtung zum Verschwenken mindestens eines vom Lasersensor (3) emittierten Laserstrahls in dem Scanbereich (2) und eine Energieversorgung für den Lasersensor (3) umfaßt, wobei die Leistung des Laserstrahls in Abhängigkeit seiner Abstrahlrichtung variiert, wobei die von der Energieversorgung dem Lasersensor (3) zugeführte Leistung variiert und in Abhängigkeit von der Richtung des Laserstrahls zugeführt wird,
**dadurch gekennzeichnet, daß**
der Scanbereich (2) des Lasersensors (3) in Abschnitte (I, II, III) unterschiedlicher Relevanz unterteilt ist und die Energieversorgung derart ausgebildet ist, daß der Lasersensor (3) in Abschnitten (I) mit hoher Detektionsrelevanz mit höherer Leistung und in den Abschnitten (II, III) geringerer Detektionsrelevanz mit geringerer Leistung versorgt wird und die Einrichtung zum Verschwenken des Laserstrahls derart ausgebildet ist, daß verschiedene Abschnitte (I, II, III) mit einer unterschiedlichen Scan-Geschwindigkeit durchlaufen werden.

2. Vorrichtung nach Anspruch 1,
**dadurch gekennzeichnet, daß**
der Verlauf (α) der Leistung stetig in azimutaler Richtung variiert.

3. Vorrichtung nach einem der Ansprüche 1 oder 2,
**dadurch gekennzeichnet, daß**
die maximale Leistung des Lasersensors (3) und/oder der Leistungsverlauf über den Scanbereich (2) in Abhängigkeit von der Kraftfahrzeuggeschwindigkeit wählbar ist.

4. Vorrichtung nach einem der Ansprüche 1 bis 3,
**dadurch gekennzeichnet, daß**
die maximale Leistung des Lasersensors und/oder der Leistungsverlauf über den Scanbereich in Abhängigkeit des Abstandes und/oder der Richtung und/oder der Art eines vom Lasersensor erfaßten Objektes wählbar ist.

5. Verfahren zum Betreiben eines Lasersensors (3) eines Kraftfahrzeuges zur Ermittlung der Richtung und/oder des Abstands an eines in einem Scanbereich (2) befindlichen Objekts mit mindestens einem Laserstrahl, der in dem Scanbereich (2) verschwenkt wird, mit einer Energieversorgung für den Lasersensor, wobei die von der Energieversorgung zugeführte Leistung variiert und in Abhängigkeit der Richtung zugeführt wird, wobei die Leistung des zumindest einen Laserstrahls in Abhängigkeit seiner Abstrahlrichtung variiert wird,
**dadurch gekennzeichnet, daß**
der Scanbereich (2) des Lasersensors in Abschnitte (I, II, III) unterschiedlicher Detektionsrelevanz unterteilt wird und eine Energieversorgung des Lasersenosrs (3) derart ausgebildet ist, dass der zumindest eine Laserstrahl in Abschnitten (I) mit hoher Detektionsrelevanz mit höherer Abstrahlleistung und in Abschnitten (II, III) mit geringerer Detektionsrelevanz mit geringerer Abstrahlleistung ausgesendet wird, wobei verschiedene Abschnitte (I, 11, III) mit einer unterschiedlichen Scan-Geschwindigkeit durchlaufen werden.

6. Verfahren nach Anspruch 5,
**dadurch gekennzeichnet, daß**
der zumindest eine Laserstrahl in Fahrtrichtung des Kraftfahrzeuges (1) mit maximaler Abstrahlleistung ausgesendet wird.

7. Verfahren nach Anspruch 5 oder 6,
**dadurch gekennzeichnet, daß**
der Verlauf der Abstrahlleistung des zumindest einen Laserstrahls in azimutaler Richtung stetig variiert.

8. Verfahren nach einem der Ansprüche 5 bis 7,
**dadurch gekennzeichnet, daß**
die maximale Abstrahlleistung des zumindest einen Laserstrahls und/oder der Leistungsverlauf des zumindest einen Laserstrahls über den Scanbereich (2) in Abhängigkeit der Fahrzeuggeschwindigkeit gewählt wird.

9. Verfahren nach einem der Ansprüche 5 bis 8,
**dadurch gekennzeichnet, daß**
die maximale Abstrahlleistung des zumindest einen Laserstrahls und/oder der Leistungsverlauf über den Scanbereich (2) in Abhängigkeit des Abstandes und/oder der Richtung und/oder der Art eines vom Lasersensors (3) erfaßten Objektes gewählt wird.

## Claims

1. Apparatus comprising at least one laser sensor (3) for a motor vehicle (1) for determining the direction and/or the distance of an object which is located in a scanning region (2), with the laser sensor (3) comprising a device for pivoting at least one laser beam, which is emitted by the laser sensor (3), in the scanning region (2) and an energy supply means for the laser sensor (3), with the power of the laser beam varying as a function of its radiation direction, with the power supplied to the laser sensor (3) by the energy supply means being varied and being supplied as a function of the direction of the laser beam,
**characterized in that**
the scanning region (2) of the laser sensor (3) is divided into sections (I, II, III) of differing relevance and the energy supply means is formed in such a way that the laser sensor (3) is supplied with relatively high power in sections (I) with a high detection relevance and with relatively low power in the sections (II, III) of lower detection relevance, and the device for pivoting the laser beam is formed in such a way that different sections (I, II, III) are passed through at a different scanning speed.

2. Apparatus according to Claim 1,
**characterized in that**
the profile (α) of the power varies continuously in the azimuthal direction.

3. Apparatus according to either of Claims 1 and 2,
**characterized in that**
the maximum power of the laser sensor (3) and/or the power profile over the scanning region (2) can be selected as a function of the motor vehicle speed.

4. Apparatus according to one of Claims 1 to 3,
**characterized in that**
the maximum power of the laser sensor and/or the power profile over the scanning region can be selected as a function of the distance and/or the direction and/or the type of an object detected by the laser sensor.

5. Method for operating a laser sensor (3) of a motor vehicle for ascertaining the direction and/or the distance to an object which is located in a scanning region (2) with at least one laser beam, which is pivoted in the scanning region (2), comprising an energy supply means for the laser sensor, with the power supplied by the energy supply means being varied and being supplied as a function of the direction, with the power of the at least one laser beam being varied as a function of its radiation direction,
**characterized in that**
the scanning region (2) of the laser sensor is divided into sections (I, II, III) of differing detection relevance and an energy supply means of the laser sensor (3) is formed in such a way that the at least one laser beam is emitted with relatively high radiation power in sections (I) with a high detection relevance and with relatively low radiation power in sections (II, III) with a lower detection relevance, with different sections (I, II, III) being passed through at a different scanning speed.

6. Method according to Claim 5,
**characterized in that**
the at least one laser beam is emitted with a maximum radiation power in the direction of travel of the motor vehicle (1).

7. Method according to Claim 5 or 6,
**characterized in that**
the profile of the radiation power of the at least one laser beam is continuously varied in the azimuthal direction.

8. Method according to one of Claims 5 to 7,
**characterized in that**
the maximum radiation power of the at least one laser beam and/or the power profile of the at least one laser beam over the scanning region (2) is selected as a function of the vehicle speed.

9. Method according to one of Claims 5 to 8,
**characterized in that**
the maximum radiation power of the at least one laser beam and/or the power profile over the scanning region (2) is selected as a function of the distance and/or the direction and/or the type of an object detected by the laser sensor (3).

## Revendications

1. Dispositif comportant au moins un détecteur laser (3) pour un véhicule automobile (1), destiné à déterminer la direction et/ou la distance d'un objet se trouvant dans une zone de balayage (2), dans lequel le détecteur laser (3) comprend un dispositif permettant de faire pivoter au moins un rayon laser émis par le détecteur laser (3) dans la zone de balayage (2) et une source d'énergie pour le détecteur laser (3), dans lequel la puissance du rayon laser varie en fonction de sa direction d'émission, dans lequel la puissance fournie au détecteur laser (3) par la source d'énergie varie et est fournie en fonction de la direction du rayon laser, **caractérisé en ce que** la zone de balayage (2) du détecteur laser (3) est divisée en secteurs (I, II, III) de pertinence différente et la source d'énergie est réalisée de telle manière que le détecteur laser (3) soit alimenté avec une puissance plus élevée dans des secteurs (I) présentant une plus grande pertinence de détection et avec une puissance moins élevée dans des secteurs (II, III) présentant une moins grande pertinence de détection, et le dispositif permettant de faire pivoter le rayon laser est réalisé de telle manière que les différents secteurs (I, II, III) soient parcourus avec des vitesses de balayage différentes.

2. Dispositif selon la revendication 1,
**caractérisé en ce que** la courbe (α) de la puissance varie en continu en direction azimutale.

3. Dispositif selon l'une quelconque des revendications 1 ou 2, **caractérisé en ce que** la puissance maximale du détecteur laser (3) et/ou la courbe de la puissance sur la zone de balayage (2) peut/peuvent être choisie(s) en fonction de la vitesse du véhicule automobile.

4. Dispositif selon l'une quelconque des revendications 1 à 3, **caractérisé en ce que** la puissance maximale du détecteur laser et/ou la courbe de la puissance sur la zone de balayage peut/peuvent être choisie(s) en fonction de la distance et/ou de la direction et/ou de la nature d'un objet détecté par le détecteur laser.

5. Procédé d'utilisation d'un détecteur laser (3) d'un véhicule automobile pour déterminer la direction et/ou la distance d'un objet se trouvant dans une zone de balayage (2) avec au moins un rayon laser, qui pivote dans la zone de balayage (2), et comportant une source d'énergie pour le détecteur laser, dans lequel on fait varier la puissance fournie par la source d'énergie et on la fournit en fonction de la direction, dans lequel on fait varier la puissance de l'au moins un rayon laser en fonction de sa direction d'émission, **caractérisé en ce que** l'on divise la zone de balayage (2) du détecteur laser en secteurs (I, II, III) présentant une pertinence de détection différente et on réalise une source d'énergie du détecteur laser (3) de telle manière que l'au moins un rayon laser soit émis avec une puissance d'émission plus élevée dans des secteurs (I) présentant une plus grande pertinence de détection et avec une puissance d'émission moins élevée dans des secteurs (II, III) présentant une moins grande pertinence de détection, dans lequel des secteurs différents (I, II, III) sont parcourus avec une vitesse de balayage différente.

6. Procédé selon la revendication 5, **caractérisé en ce que** l'on émet l'au moins un rayon laser avec la puissance d'émission maximale dans la direction de déplacement du véhicule automobile (1).

7. Procédé selon la revendication 5 ou 6, **caractérisé en ce que** l'on fait varier en continu en direction azimutale la courbe de la puissance d'émission de l'au moins un rayon laser.

8. Procédé selon l'une quelconque des revendications 5 à 7, **caractérisé en ce que** l'on choisit la puissance d'émission maximale de l'au moins un rayon laser et/ou la courbe de la puissance de l'au moins un rayon laser sur la zone de balayage (2) en fonction de la vitesse du véhicule.

9. Procédé selon l'une quelconque des revendications 5 à 8, **caractérisé en ce que** l'on choisit la puissance d'émission maximale de l'au moins un rayon laser et/ou la courbe de la puissance sur la zone de balayage (2) en fonction de la distance et/ou de la direction et/ou de la nature d'un objet détecté par le détecteur laser (3).
